# EUROPÄISCHE PATENTSCHRIFT

(11) **EP 1 266 435 B1**
(45) Veröffentlichungstag und Bekanntmachung des Hinweises auf die Patenterteilung: **16.06.2004**
(21) Anmeldenummer: 01913714.0
(22) Anmeldetag: 21.02.2001
(51) Int. Cl.: H02H 3/06

(54) **VERFAHREN ZUM DURCHFÜHREN EINER AUTOMATISCHEN WIEDEREINSCHALTUNG UND WIEDEREINSCHALTEINRICHTUNG**
METHOD FOR AUTOMATICALLY RECLOSING AND AN AUTOMATIC RECLOSING DEVICE
PROCEDE DE REENCLENCHEMENT AUTOMATIQUE DU COURANT ET INSTALLATION DE REENCLENCHEMENT AUTOMATIQUE

(30) Priorität: 20.03.2000 DE 10014929
(43) Veröffentlichungstag der Anmeldung: 18.12.2002
(73) Patentinhaber: SIEMENS AKTIENGESELLSCHAFT, 80333 München (DE)
(72) Erfinder: CLAUS, Michael, 90579 Langenzenn (DE); RISSLAND, Volker, 16727 Markwitz (DE); ZIMMER, Henry, 13125 Berlin (DE)
(86) Internationale Anmeldenummer: PCT/DE2001/000718
(87) Internationale Veröffentlichungsnummer: WO 2001/071877

(56) Entgegenhaltungen:
- AT-A- 346 959
- US-A- 4 484 246

## Beschreibung

Die Erfindung betrifft ein Verfahren zum Durchführen einer automatischen Wiedereinschaltung bei einem Kurzschluss auf einem durch jeweils einen Schalter mit zugeordneter Kurzschlusserfassungseinrichtung begrenzten Leitungsabschnitt einer elektrischen Energieversorgungsleitung, bei dem nach einer kurzschlussbedingten Auslösung der Schalter durch einen an einem Ende des Leitungsabschnittes erzeugten Wiedereinschaltbefehl der Schalter an dem anderen Ende mitgenommen wird.

Die Entgegenhaltung AT-A-346 959 zeigt eine Schutzeinrichtung bei der auf beiden Seiten des zu schützenden Leitungsabschnitts jeweils eine Wiedereinschalteinrichtung vorgesehen ist, welche voneinander unabhängig schalten und nach einer Kurzunterbrechung (KU) zeitgleich oder ("gelegentlich") gestaffelt das jeweilige Ende des Leitungsabschnittes mit dem Netz verbinden, vorausgesetzt, daß das jeweilige Leitungsende eine "gesunde Spannung", d.h. keinen Kurzschluß (mehr) aufweist.

Ein Verfahren obenstehender Art ist auch aus dem Buch von H. Titze "Fehler und Fehlerschutz in elektrischen Drehstromanlagen", Zweiter Band, 1953, Seiten 223 bis 227, insbesondere Seite 227 bekannt. Bei diesem bekannten Verfahren ist an jedem Ende eines zu überwachenden Leitungsabschnittes einer elektrischen Energieversorgungsleitung jeweils ein Schalter mit jeweils einer Kurzschlusserfassungseinrichtung vorgesehen; wird von den Kurzschlusserfassungseinrichtungen ein Fehler auf dem zu überwachenden Leitungsabschnitt erfasst, dann werden von ihnen die zugeordneten Leistungsschalter mittels eines Auslösesignals betätigt, woraufhin diese unter Abtrennung des Leitungsabschnittes aus der Energieversorgungsleitung öffnen. Durch eine Wiedereinschalteinrichtung, insbesondere ein Wiedereinschaltrelais wird dafür gesorgt, dass nach kurzer Zeit durch Abgabe eines Wiedereinschaltbefehls der Schalter an dem einen Ende des Leitungsabschnittes wieder geschlossen wird; dabei wird mit der Betätigung der Wiedereinschalteinrichtung auch der Schalter am anderen Ende des Leitungsabschnittes mitgenommen und somit ebenfalls geschlossen. Bei dem bekannten Verfahren werden also die beiden Schalter an den Enden des zu überwachenden Leitungsabschnittes gewissermaßen synchron wiedereingeschaltet.

Der Erfindung liegt die Aufgabe zugrunde, das bekannte Verfahren so fortzuentwickeln, dass die Wiedereinschaltung der Schalter unter größtmöglicher Schonung derselben erfolgt.

Zur Lösung dieser Aufgabe wird bei einem Verfahren der eingangs angegebenen Art erfindungsgemäß der Schalter an dem anderen Ende mit einer vorgegebenen Zeitverzögerung mitgenommen, sofern bereits am Anfang der Zeitverzögerung der Kurzschluss beendet ist. Dabei ist die Erfindung nicht darauf beschränkt, dass dem einen Ende des Leitungsabschnittes nur ein weiteres bzw. anderes Ende zugeordnet ist, sondern sie ist auch anwendbar bei solchen Leitungsabschnitten, von denen Abzweigleitungen abgehen, die jeweils mit einem Schalter an ihren von dem einen Ende des Leitungsabschnittes abgewandten Ende begrenzt sind.

Ein wesentlicher Vorteil des erfindungsgemäßen Verfahrens besteht darin, dass die Schalter des zu überwachenden Leitungsabschnittes bestmöglich geschont betrieben werden. Dies ist darauf zurückzuführen, dass bei dem erfindungsgemäßen Verfahren eine Wiedereinschaltung zunächst nur bezüglich des Schalters an dem einen Ende des Leitungsabschnittes durchgeführt wird. Wird nach dieser Wiedereinschaltung von der zugeordneten Kurzschlusserfassungseinrichtung nach wie vor ein Kurzschluss festgestellt, dann wird durch eine weitere Auslösung dieser Schalter wieder geöffnet. Der Schalter am anderen Ende des Leitungsabschnittes bleibt während dieser Zeit unbetätigt und wird daher nicht auf einen noch bestehenden Kurzschluss geschaltet; er wird somit geschont. Erst wenn eine vorgegebene Zeitverzögerung abgelaufen ist und an dem einen Ende der Leitung nach dem Wiedereinschalten ein Kurzschluss nicht festgestellt wird, erfolgt die Einschaltung des Schalters an dem anderen Ende des Leitungsabschnittes. Ein weiterer Vorteil des erfindungsgemäßen Verfahrens ergibt sich dadurch, dass durch die Vermeidung des beidseitigen, gleichzeitigen Zuschaltens auf ggf. einen noch bestehenden Kurzschluss die Netzstabilität weniger stark beeinträchtigt wird.

Bei einer vorteilhaften Ausführungsform des erfindungsgemäßen Verfahrens wird der Schalter an dem anderen Ende durch Beaufschlagung mit einem gegenüber dem Wiedereinschaltbefehl um die vorgegebene Zeitverzögerung verzögerten Mitnahmesignal mitgenommen, das aus dem Wiedereinschaltbefehl abgeleitet ist.

Es hat sich ferner als vorteilhaft erwiesen, wenn das Mitnahmesignal erzeugt wird, wenn nach dem Auftreten des Wiedereinschaltbefehls die vorgegebene Zeitverzögerung eingetreten ist, ohne dass von der Kurzschlusserfassungseinrichtung an dem einen Ende des Leitungsabschnitts eine weitere Auslösung veranlasst worden ist.

Die Erfindung bezieht sich ferner auf eine Wiedereinschalteinrichtung an einem Ende eines durch jeweils einen Schalter mit zugeordneter Kurzschlusserfassungseinrichtung begrenzten Leitungsabschnitt einer elektrischen Energieversorgungsleitung mit einem Ausgang zur Abgabe eines Wiedereinschaltbefehls an den Schalter an dem einen Ende des Leitungsabschinitts und mit einem Ausgangsbaustein zur Abgabe eines Mitnahmesignals an den Schalter an dem anderen Ende des Leitungsabschnitts.

Um mit einer solchen Wiedereinschalteinrichtung eine schalterschonende Betriebsweise zu erreichen, ist erfindungsgemäß der Ausgangsbaustein eingangsseitig mit dem Ausgang der Wiedereinschalteinrichtung verbunden und weist ein Zeitverzögerungsglied auf, das nach Ablauf einer vorgegebenen Zeitverzögerung ein Meldesignal abgibt; an das Zeitverzögerungsglied ist mit einem Eingang eine Logikschaltung angeschlossen, die mit einem weiteren Eingang mit einem Ausgang der Kurzschlusserfassungseinrichtung des einen Endes des Leitungsabschnitts verbunden ist, und der Ausgang der Logikschaltung steht über einen Kommunikationskanal mit dem Schalter an dem anderen Ende des Leitungsabschnitts in Verbindung.

Ein wesentlicher Vorteil der erfindungsgemäßen Wiedereinschalteinrichtung wird darin gesehen, dass mit ihr ein zur Schalterschonung beitragendes, zeitverzögertes Mitnahmesignal in vergleichsweise einfacher Weise, also mit geringem Schaltungsaufwand, gewonnen werden kann.

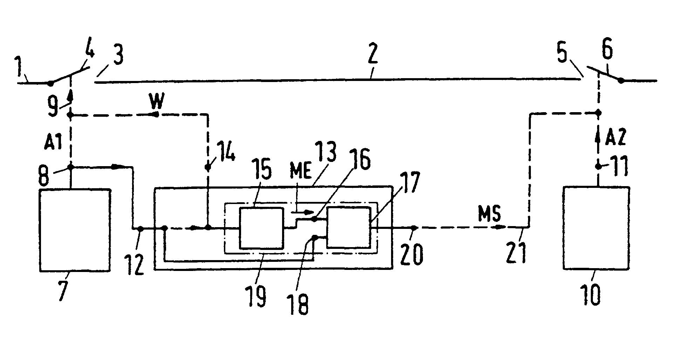

Zur weiteren Erläuterung der Erfindung sind in der Figur die zur Durchführung des erfindungsgemäßen Verfahrens wesentlichen Elemente einer Anordnung mit einer Wiedereinschalteinrichtung dargestellt.

Die Figur lässt eine elektrische Energieversorgungsleitung 1 erkennen, die einen Leitungsabschnitt 2 enthält. Dieser Leitungsabschnitt 2 ist an seinem einen Ende 3 durch einen Schalter 4 und an seinem anderen Ende 5 durch einen Schalter 6 begrenzt.

Dem Schalter 4 an dem einen Ende 3 ist eine Kurzschlusserfassungseinrichtung 7 zugeordnet, die in nicht dargestellter Weise Strom und Spannung an der elektrischen Energieversorgungsleitung 1 bzw. dem Leitungsabschnitt 2 erfasst und aus diesen erfassten Größen im Kurzschlussfalle an ihrem Ausgang 8 ein Auslösesignal A1 erzeugt, das über eine schematisch dargestellte Verbindung 9 den Schalter 4 in die dargestellte Öffnungsstellung bringt. Entsprechend ist dem Schalter 6 am anderen Ende 5 eine weitere Kurzschlusserfassungseinrichtung 10 zugeordnet, die ebenfalls aus den Strömen und Spannungen an der Energieversorgungsleitung an ihrem Ausgang 11 ein Auslösesignal A2 erzeugt, wenn auf dem Leitungsabschnitt 2 ein Kurzschluss aufgetreten ist; auf das Auslösesignal A2 hin wird der Schalter 6 in die dargestellte, geöffnete. Stellung gebracht.

Da häufig ein Kurzschluss auf einer Energieversorgungsleitung, insbesondere einer Freileitung, durch einen Lichtbogen gebildet ist, wird schon seit langem das sogenannte Verfahren der automatischen Wiedereinschaltung durchgeführt. Bei der in der Figur dargestellten Anordnung zur Durchführung des erfindungsgemäßen Verfahrens geschieht dies in folgender Weise:

Ist von der Kurzschlusserfassungseinrichtung 7 an ihrem Ausgang 8 ein Auslösesignal A1 erzeugt worden, dann wird dieses Auslösesignal auch einem Eingang 12 einer Wiedereinschalteinrichtung 13 zugeführt. Diese Wiedereinschalteinrichtung 13 erzeugt nach einer vorgegebenen Zeit an ihrem Ausgang 14 einen Wiedereinschaltbefehl W, durch den der Schalter 4 geschlossen wird. Mit der Erzeugung des Einschaltbefehls W wird ein verzögerungsglied 15 der wiedereinschalteinrichtung 13 angelassen, das nach einer vorgegebenen Zeitverzögerung über einen Eingang 16 einer Logikschaltung 17 ein Meldesignal ME zuführt. Ein weiterer Eingang 18 der Logikschaltung 17 ist direkt mit dem Eingang 12 der Wiedereinschalteinrichtung 13 verbunden und wird daher mit dem Auslösesignal A1 beaufschlagt . Das Verzögerungsglied 15 und die Logikschaltung 17 bilden einen Ausgabebaustein 19.

Die Logikschaltung 17 bzw. der gesamte Ausgabebaustein 19 sind so ausgelegt, dass an einem Ausgang 20 des Ausgabebausteins 19 bzw. der Wiedereinschalteinrichtung 13 ein Mitnahmesignal MS nur dann auftritt, wenn während der durch das Verzögerungsglied 15 entsprechend der vorgegebenen Zeitverzögerung bestimmten Zeit von der Kurzschlusserfassungseinrichtung 7 nicht noch ein weiteres Auslösesignal über ihren Ausgang 8 abgegeben worden ist. Dies ist der Fall, wenn nach der Wiedereinschaltung des Schalters 4 ein Kurzschluss nicht mehr festgestellt wird. Der Leitungsabschnitt 2 ist dann nicht mehr kurzschlussbehaftet, so dass von dem Mitnahmesignal MS der Schalter 6 an dem anderen Ende 5 des Leitungsabschnittes 2 schonend - ohne auf einen Kurschluss zu schalten - geschlossen wird.

Wird dagegen von der Kurzschlusserfassungseinrichtung 7 nach der Abgabe des Wiedereinschaltbefehls W an den Schalter 4 und damit nach dem Schließen dieses Schalters das Fortbestehen des Kurzschlusses auf dem Leitungsabschnitt 2 festgestellt, dann wird ein weiteres Auslösesignal an dem Ausgang 8 hin gebildet, mit dem nicht nur der Schalter 4 wieder geöffnet wird, sondern auch das Verzögerungsglied 15 wieder zurückgestellt wird, so dass an seinem Ausgang das Meldesignal ME nicht entsteht. Infolgedessen tritt auch das Mitnahmesignal MS am Ausgang 20 nicht auf, und der Schalter 6 bleibt weiterhin geöffnet.

## Patentansprüche

1. Verfahren zum Durchführen einer automatischen Wiedereinschaltung bei einem Kurzschluss auf einem durch jeweils einen Schalter mit zugeordneter Kurzschlusserfassungseinrichtung begrenzten Leitungsabschnitt einer elektrischen Energieversorgungsleitung, bei dem
- nach einer kurzschlussbedingten Auslösung der Schalter durch einen an einem Ende des Leitungsabschnittes erzeugten Wiedereinschaltbefehl der Schalter an dem anderen Ende mitgenommen wird,
**dadurch gekennzeichnet, dass**
- der Schalter (6) an dem anderen Ende (5) mit einer vorgegebenen Zeitverzögerung mitgenommen wird, sofern bereits am Anfang der Zeitverzögerung der Kurzschluss beendet ist.

2. Verfahren nach Anspruch 1,
**dadurch gekennzeichnet, dass**
- der Schalter (6) an dem anderen Ende (5) durch Beaufschlagung mit einem gegenüber dem Wiedereinschaltbefehl (W) um die vorgegebene Zeitverzögerung verzögerten Mitnahmesignal (MS) mitgenommen wird, das aus dem Wiedereinschaltbefehl (W) abgeleitet ist.

3. Verfahren nach Anspruch 2,
**dadurch gekennzeichnet, dass**
- das Mitnahmesignal (MS) erzeugt wird, wenn nach dem Auftreten des Wiedereinschaltbefehls (W) die vorgegebene Zeitverzögerung eingetreten ist, ohne dass von der Kurzschlusserfassungseinrichtung (7) an dem einen Ende (3) des Leitungsabschnitts (2) eine weitere Auslösung veranlasst worden ist.

4. Wiedereinschalteinrichtung an einem Ende eines durch jeweils einen Schalter (4, 6) mit zugeordneter Kurzschlusserfassungseinrichtung (7, 10) begrenzten Leitungsabschnitt (2) einer elektrischen Energieversorgungsleitung (1) mit einem Ausgang (14) zur Abgabe eines Wiedereinschaltbefehls (W) an den Schalter (4) an dem einen Ende (3) des Leitungsabschnitts (2) und mit einem Ausgangsbaustein (19) zur Abgabe eines Mitnahmesignals (MS) an den Schalter (6) an dem anderen Ende (S) des Leitungsabschnitts (2),
**dadurch gekennzeichnet, dass**
- der Ausgangsbaustein (19) eingangsseitig mit dem Ausgang (14) der Wiedereinschalteinrichtung (13) verbunden ist und ein Zeitverzögerungsglied aufweist, das nach Ablauf einer vorgegebenen Zeitverzögerung (15) ein Meldesignal (ME) abgibt,
- an das Zeitverzögerungsglied (15) mit einem Eingang (16) eine Logikschaltung (17) angeschlossen ist, die mit einem weiteren Eingang (18) mit einem Ausgang (8) der Kurzschlusserfassungseinrichtung (7) des einen Endes (3) des Leitungsabschnitts (2) verbunden ist, und
- der Ausgang (20) der Logikschaltung (17) über einen Kommunikationskanal (21) mit dem Schalter (6) an dem anderen Ende (5) des Leitungsabschnitts (2) in Verbindung steht.

## Claims

1. Method for automatic reclosure in the case of a short circuit on a line section, limited in each case by a breaker with associated short-circuit detection device, of an electric energy supply line, in which
- after the breakers have been tripped due to a short circuit, the breaker at the other end is intertripped by a reclosing command generated at one end of the line section,
**characterized in that**
- the breaker (6) at the other end (5) is intertripped with a predetermined time delay if the short-circuit has already ended at the beginning of the time delay.

2. Method according to Claim 1, **characterized in that**
- the breaker (6) at the other end (5) is intertripped by having applied to it an intertripping signal (MS), which is derived from the reclosing command (W), the intertripping signal (MS) being delayed by the predetermined time delay with respect to the reclosing command (W).

3. Method according to Claim 2, **characterized in that**
- the intertripping signal (MS) is generated if the predetermined time delay has occurred after the occurrence of the reclosing command (W) without any further tripping having been initiated by the short-circuit detection device (7) at one end (3) of the line section (2).

4. Reclosing device at one end of a line section (2), which is limited in each case by a breaker (4, 6) with associated short-circuit detection device (7, 10), of an electrical energy supply line (1), the reclosing device having an output (14) for delivering a reclosing command (W) to the breaker (4) at one end (3) of the line section (2) and with an output chip (19) for delivering an intertripping signal (MS) to the breaker (6) at the other end (S) of the line section (2), **characterized in that**
- the output chip (19) is connected at its input to the output (14) of the reclosing device (13) and exhibits a time delay element which delivers a status signal (ME) after a predetermined time delay (15) has elapsed,
- the time delay element (15) is connected to an input (16) of a logic circuit (17) which is connected with another input (18) to an output (8) of the short-circuit detection device (7) of one end (3) of the line section (2), and
- the output (20) of the logic circuit (17) is connected to the breaker (6) at the other end (5) of the line section (2) via a communication channel (21).

## Revendications

1. Procédé pour la mise en oeuvre d'un réenclenchement automatique lors d'un court-circuit sur un tronçon de ligne, limité respectivement par un interrupteur avec dispositif associé de détection de court-circuit, d'une ligne d'alimentation en énergie électrique,
- dans lequel, après un déclenchement des interrupteurs dû à un court-circuit, une instruction de réenclenchement produite à une extrémité du tronçon de ligne entraîne l'interrupteur à l'autre extrémité,
**caractérisé par le fait que**
- l'interrupteur (6) à l'autre extrémité (5) est entraîné avec un retard prédéterminé dans la mesure où le court-circuit est déjà terminé au début du retard.

2. Procédé selon la revendication 1,
**caractérisé par le fait que**
- l'interrupteur (6) à l'autre extrémité (5) est entraîné par l'application d'un signal d'entraînement (MS) qui est retardé du retard prédéterminé par rapport à l'instruction de réenclenchement (W) et qui est déduit de l'instruction de réenclenchement (W).

3. Procédé selon la revendication 2,
**caractérisé par le fait que**
- le signal d'entraînement (MS) est produit lorsque, après l'apparition de l'instruction de réenclenchement (W), le retard prédéterminé a expiré sans que le dispositif de détection de court-circuit (7) à la première extrémité (3) du tronçon de ligne (2) ait provoqué un autre déclenchement.

4. Dispositif de réenclenchement à une extrémité d'un tronçon de ligne (2), limité à chaque fois par un interrupteur (4, 6) avec dispositif de détection de court-circuit (7, 10) associé, d'une ligne d'alimentation en énergie électrique (1), avec une sortie (14) pour la délivrance d'une instruction de réenclenchement (W) à l'interrupteur (4) à une première extrémité (3) du tronçon de ligne (2) et avec un module de sortie (19) pour la délivrance d'un signal d'entraînement (MS) à l'interrupteur (6) à l'autre extrémité (5) du tronçon de ligne (2),
**caractérisé par le fait que**
- le module de sortie (19) est relié côté entrée à la sortie (14) du dispositif de réenclenchement (13) et comporte un élément temporisateur qui délivre un signal d'avis (ME) après l'expiration d'un retard prédéterminé (15),
- un circuit logique (17) est raccordé par une entrée (16) à l'élément temporisateur (15) et est relié par une autre entrée (18) à une sortie (8) du dispositif de détection de court-circuit (7) de la première extrémité (3) du tronçon de ligne (2), et
- la sortie (20) du circuit logique (17) est en liaison avec l'interrupteur (6) à l'autre extrémité (5) du tronçon de ligne (2) par l'intermédiaire d'un canal de communication (21).
